(19) Europäisches Patentamt
European Patent Office
Office européen des brevets

(11) EP 1 177 690 B1

(12) EUROPÄISCHE PATENTSCHRIFT

(45) Veröffentlichungstag und Bekanntmachung des Hinweises auf die Patenterteilung:
**12.11.2003 Patentblatt 2003/46**

(21) Anmeldenummer: **00931013.7**

(22) Anmeldetag: **05.04.2000**

(51) Int Cl.[7]: **H04N 7/26**

(86) Internationale Anmeldenummer:
**PCT/DE00/01057**

(87) Internationale Veröffentlichungsnummer:
**WO 00/069178 (16.11.2000 Gazette 2000/46)**

# (54) VERFAHREN UND ANORDNUNGEN ZUR RECHNERGESTÜTZTEN BEWEGUNGSKOMPENSATION EINES DIGITALISIERTEN BILDES SOWIE COMPUTERPROGRAMM-ERZEUGNISSE UND COMPUTERLESBARE SPEICHERMEDIEN

METHOD AND DEVICES FOR THE COMPUTER-ASSISTED MOTION COMPENSATION OF A DIGITALIZED IMAGE AND COMPUTER PROGRAM PRODUCTS AND COMPUTER-READABLE STORAGE MEDIA

PROCEDES ET DISPOSITIFS POUR COMPENSER DE MANIERE ASSISTEE PAR ORDINATEUR LE MOUVEMENT D'UNE IMAGE NUMERISEE, PRODUITS-PROGRAMMES D'ORDINATEUR ET SUPPORTS D'INFORMATION LISIBLES PAR UN ORDINATEUR

(84) Benannte Vertragsstaaten:
**DE FR GB**

(30) Priorität: **07.05.1999 DE 19921253**

(43) Veröffentlichungstag der Anmeldung:
**06.02.2002 Patentblatt 2002/06**

(73) Patentinhaber: **SIEMENS AKTIENGESELLSCHAFT**
**80333 München (DE)**

(72) Erfinder: **KUTKA, Robert**
**D-82269 Geltendorf (DE)**

(56) Entgegenhaltungen:
**EP-A- 0 614 318**
**EP-A- 0 631 432**
**WO-A-00/11874**
**WO-A-99/12355**
**US-A- 5 436 672**

- **MIGLIORATI P ET AL: "MULTISTAGE MOTION ESTIMATION FOR IMAGE INTERPOLATION" SIGNAL PROCESSING. IMAGE COMMUNICATION,NL,ELSEVIER SCIENCE PUBLISHERS, AMSTERDAM, Bd. 7, Nr. 3, 1. September 1995 (1995-09-01), Seiten 187-199, XP000523865 ISSN: 0923-5965**
- **KAMIKURA K ET AL: "GLOBAL MOTION COMPENSATION IN VIDEO CODING" ELECTRONICS & COMMUNICATIONS IN JAPAN, PART I - COMMUNICATIONS,US,SCRIPTA TECHNICA. NEW YORK, Bd. 78, Nr. 4, 1. April 1995 (1995-04-01), Seiten 91-101, XP000523910 ISSN: 8756-6621**
- **YI TONG TSE ET AL: "GLOBAL ZOOM/PAN ESTIMATION AND COMPENSATION FOR VIDEO COMPRESSION" INTERNATIONAL CONFERENCE ON ACOUSTICS, SPEECH & SIGNAL PROCESSING. ICASSP,US,NEW YORK, IEEE, Bd. CONF. 16, 14. Mai 1991 (1991-05-14), Seiten 2725-2728, XP000453526 ISBN: 0-7803-0003-3**
- **SEO K -S ET AL: "HIERARCHICAL BLOCK-MOTION ESTIMATION USING LINEAR MODEL-BASED POSTPROCESSING" ELECTRONICS LETTERS,GB,IEE STEVENAGE, Bd. 29, Nr. 22, 28. Oktober 1993 (1993-10-28), Seiten 1915-1917, XP000407588 ISSN: 0013-5194**
- **HIROHISA JOZAWA ET AL: "TWO-STAGE MOTION COMPENSATION USING ADAPTIVE GLOBAL MC AND LOCAL AFFINE MC" IEEE TRANSACTIONS ON CIRCUITS AND SYSTEMS FOR VIDEO TECHNOLOGY,US,IEEE INC. NEW YORK, Bd. 7, Nr. 1, 1. Februar 1997 (1997-02-01), Seiten 75-85, XP000678881 ISSN: 1051-8215**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Verfahren und zur rechnergestützten Bewegungskompensation eines digitalisierten Bildes

Ein solches Verfahren und eine solche Anordnung ist aus [1] bekannt.

Bei diesem bekannten Verfahren wird ein Bild von einer Kamera aufgenommen, digitalisiert und gespeichert. Das aufgenommene digitalisierte Bild weist Bildpunkte auf, denen Codierungsinformation zugeordnet ist.

Unter Codierungsinformation ist Helligkeitsinformation (Luminanzinformation) oder Farbinformation (Chrominanzinformation) zu verstehen.

Das gespeicherte Bild wird vergrößert und die Codierungsinformation wird zwischen den ursprünglichen Bildpunkten des unvergrößerten Bildes interpoliert. Auf das gesamte vergrößerte Bild wird eine "globale" Bewegungsschätzung, d.h. eine Schätzung der Bewegung des gesamten Bildes, sowie eine "globale" Bewegungskompensation angewendet. Als Ergebnis der globalen Bewegungsschätzung wird ein Bildbewegungsvektor gebildet, der dem vergrößerten Bild zugeordnet wird. Aus dem vergrößerten Bild wird ein bewegungskompensierter Bildausschnitt ausgelesen. Unter einem bewegungskompensierten Bildausschnitt ist ein Bildausschnitt zu verstehen, der um den ermittelten Bildbewegungsvektor innerhalb des vergrößerten Bildes verschoben worden ist.

Die Bewegungskompensation erfolgt, um insbesondere eine Zitterbewegung eines Menschen bei der Aufnahme eines Bildes mit einer handgehaltenen Kamera, auszugleichen.

Die aus [1] bekannte Vorgehensweise weist insbesondere den.. Nachteil auf, daß durch die Vergrößerung des Bildes die Bildauflösung der Kamera reduziert wird, was sich als Unschärfe in dem bewegungskompensierten Bild bemerkbar macht.

Ferner ist es bekannt, unter Verwendung mechanischer Mittel eine Bewegungskompensation durchzuführen. Bei einer solchen Anordnung sind mechanische Sensoren in einer Kamera vorgesehen, die eine Bewegung, beispielsweise eine Zitterbewegung, der die Kamera unterliegt, messen. Ferner ist ein bewegliches Linsensystem vorgesehen, das abhängig von der ermittelten Bewegung derart gesteuert wird, daß die Bewegung ausgeglichen wird und damit ein ruhiges, vor der eigentlichen Aufnahme des Bildes, bewegungskompensiertes Bild gewährleistet wird.

Nachteilig an dieser Technologie ist jedoch deren erhebliches zusätzliches Gewicht durch die zusätzlichen Sensoren sowie durch das Linsensystem. Weiterhin ist die Realisierung einer solchen Anordnung teuer. Damit ist diese Technologie insbesondere für kleine Geräte, beispielsweise ein Video-Mobiltelefon, ungeeignet.

Ein blockbasiertes Bildcodierungsverfahren gemäß dem H.263-Standard ist aus [2] bekannt.

Aus [3], [4], [5] sind weitere Verfahren zur globalen Bewegungsschätzung bekannt.

Aus [6] ist ein Verfahren zur Bewegungskompensation eines Bildes bekannt, bei dem für eine Bildsequenz eine Bewegungsschätzung durchgeführt wird.

Aus [7] sind die im Bereich der Bildkodierung üblicherweise verwendeten Komponenten bekannt.

Damit liegt der Erfindung das Problem zugrunde, Verfahren und Anordnungen zur Bewegungskompensation eines digitalisierten Bildes anzugeben, die ohne ein aufwendiges zusätzliches Linsensystem auskommen und mit denen eine Reduktion der Bildauflösung des aufgenommenen Bildes vermieden wird. Das Problem wird durch die Verfahren und Anordnungen sowie die Computerprogramm-Erzeugnisse und die computerlesbaren Speichermedien mit den Merkmalen gemäß den unabhängigen Patentansprüchen gelöst.

Bei einem Verfahren zur rechnergestützten Bewegungskompensation eines digitalisierten Bildes wird für das Bild und für eine vorgegebene Anzahl zeitlich vorangegangener Bilder jeweils für das gesamte Bild eine Bewegungsschätzung durchgefuhrt. Damit wird jeweils ein Bildbewegungsvektor ermittelt. Die Bilder werden unter Verwendung des jeweiligen Bildbewegungsvektors bewegungskompensiert in einem Speicher gespeichert. Ein vorgegebener Bereich des Speichers wird ausgelesen zur Bildung des bewegungskompensierten Bildes.

Bei einem weiteren Verfahren zur rechnergestützten Bewegungskompensation eines digitalisierten Bildes wird das Bild in einem Speicher gespeichert. Für das gesamte Bild eine Bewegungsschätzung wird durchgeführt. Als Ergebnis der Bewegungsschätzung ergibt sich ein Bildbewegungsvektor. Ferner wird ein Bereich des Speichers ausgelesen, der einen Bildausschnitt des gesamten Bildes umfaßt. Die Position des Bereich in dem Bild ergibt sich ausgehend von einer vorgegebenen Grundposition, bewegungskompensiert abhängig von dem ermittelten Bildbewegungsvektor. Zur Bildung des bewegungskompensierten Bildes wird der Bereich des Speichers an der ermittelten Position ausgelesen.

Eine Anordnung zur rechnergestützten Bewegungskompensation eines digitalisierten Bildes, weist einen Prozessor auf, der derart eingerichtet ist, daß folgende Schritte durchführbar sind:

- für das Bild und für eine vorgegebene Anzahl zeitlich vorangegangener Bilder jeweils für das gesamte Bild wird eine Bewegungsschätzung durchgeführt, womit jeweils ein Bildbewegungsvektor ermittelt wird,
- die Bilder werden unter Verwendung des jeweiligen Bildbewegungsvektors bewegungskompensiert in einem Speicher gespeichert, und

- ein vorgegebener Bereich des Speichers wird ausgelesen zur Bildung des bewegungskompensierten Bildes.

Eine weitere Anordnung zur rechnergestützten Bewegungskompensation eines digitalisierten Bildes umfaßt einen Prozessor, der derart eingerichtet ist, daß folgende Schritte durchführbar sind:

- das Bild wird in einem Speicher gespeichert,
- für das gesamte Bild wird eine Bewegungsschätzung durchgeführt, womit ein Bildbewegungsvektor ermittelt wird,
- ein Bereich des Speichers, der einen Bildausschnitt des gesamten Bildes umfaßt, wird ausgelesen,
- die Position des Bereich in dem Bild ergibt sich ausgehend von einer vorgegebenen Grundposition, bewegungskompensiert abhängig von dem ermittelten Bildbewegungsvektor, und
- der Bereich des Speichers wird an der ermittelten Position ausgelesen zur Bildung des bewegungskompensierten Bildes.

Auf einem computerlesbaren Speichermedium ist ein Programm gespeichert, das es einem Computer ermöglicht, nachdem es in einen Speicher des Computers geladen worden ist, folgende Schritte durchzuführen zur Bewegungskompensation eines digitalisierten Bildes:

- für das Bild und für eine vorgegebene Anzahl zeitlich vorangegangener Bilder jeweils für das gesamte Bild wird eine Bewegungsschätzung durchgeführt, womit jeweils ein Bildbewegungsvektor ermittelt wird,
- die Bilder werden unter Verwendung des jeweiligen Bildbewegungsvektors bewegungskompensiert in einem Speicher gespeichert, und
- ein vorgegebener Bereich des Speichers wird ausgelesen zur Bildung des bewegungskompensierten Bildes.

Auf einem weiteren computerlesbaren Speichermedium ist ein Programm gespeichert, das es einem Computer ermöglicht, nachdem es in einen Speicher des Computers geladen worden ist, folgende Schritte durchzuführen zur Bewegungskompensation eines digitalisierten Bildes:

- das Bild wird in einem Speicher gespeichert,
- für das gesamte Bild wird eine Bewegungsschätzung durchgeführt, womit ein Bildbewegungsvektor ermittelt wird,
- ein Bereich des Speichers, der einen Bildausschnitt des gesamten Bildes umfaßt, wird ausgelesen,
- die Position des Bereich in dem Bild ergibt sich ausgehend von einer vorgegebenen Grundposition, bewegungskompensiert abhängig von dem ermittelten Bildbewegungsvektor, und
- der Bereich des Speichers wird an der ermittelten Position ausgelesen zur Bildung des bewegungskompensierten Bildes.

Ein Computerprogramm-Erzeugnis enthält ein computerlesbares Speichermedium, auf dem ein Programm gespeichert ist, das es einem Computer ermöglicht, nachdem es in einen Speicher des Computers geladen worden ist, folgende Schritte durchzuführen zur Bewegungskompensation eines digitalisierten Bildes:

- für das Bild und für eine vorgegebene Anzahl zeitlich vorangegangener Bilder jeweils für das gesamte Bild wird eine Bewegungsschätzung durchgeführt, womit jeweils ein Bildbewegungsvektor ermittelt wird,
- die Bilder werden unter Verwendung des jeweiligen Bildbewegungsvektors bewegungskompensiert in einem Speicher gespeichert, und
- ein vorgegebener Bereich des Speichers wird ausgelesen zur Bildung des bewegungskompensierten Bildes.

Ein weiteres Computerprogramm-Erzeugnis umfaßt ein computerlesbares Speichermedium, auf dem ein Programm gespeichert ist, das es einem Computer ermöglicht, nachdem es in einen Speicher des Computers geladen worden ist, folgende Schritte durchzuführen zur Bewegungskompensation eines digitalisierten Bildes:

- das Bild wird in einem Speicher gespeichert,
- für das gesamte Bild wird eine Bewegungsschätzung durchgeführt, womit ein Bildbewegungsvektor ermittelt wird,
- ein Bereich des Speichers, der einen Bildausschnitt des gesamten Bildes umfaßt, wird ausgelesen,
- die Position des Bereich in dem Bild ergibt sich ausgehend von einer vorgegebenen Grundposition, bewegungskompensiert abhängig von dem ermittelten Bildbewegungsvektor, und
- der Bereich des Speichers wird an der ermittelten Position ausgelesen zur Bildung des bewegungskompensierten Bildes.

Durch die Erfindung wird eine kostengünstige Lösung zur Bewegungskompensation eines digitalisierten Bildes angegeben, durch die eine Reduktion der Bildauflösung der Kamera vermieden wird. Damit weist das bewegungskompensierte Bild eine gegenüber dem Verfahren aus [1] erhöhte Schärfe auf.

Bevorzugte Weiterbildungen der Erfindung ergeben sich aus den abhängigen Ansprüchen.

Die im weiteren beschriebenen Weiterbildungen beziehen sich sowohl auf die Verfahren, die Anordnungen sowie die Computerprogramm-Erzeugnisse und die computerlesbaren Speichermedien.

Die Erfindung kann sowohl in Software als auch in Hardware, beispielsweise unter Verwendung einer speziellen elektrischen Schaltung, realisiert werden.

In einer Weiterbildung ist es vorgesehen, jedes zeitlich vorangegangene Bild bewegungskompensiert durch das zeitlich nachfolgende Bild in dem Speicher in überlappenden Bereichen der Bilder zu überschreiben.

Die Erfindung wird bevorzugt zur Codierung und/oder Decodierung eines digitalisierten Bildes eingesetzt.

Die Erfindung eignet sich insbesondere für den Einsatz in einem mobilen Telekommunikationsendgerät, z.B. einem Video-Mobiltelefon.

Ein Ausführungsbeispiel der Erfindung ist in den Figuren dargestellt und wird im weiteren näher erläutert.

Es zeigen

| | |
|---|---|
| Figur 1 | ein Blockdiagramm, in dem das anschauliche Prinzip des Ausführungsbeispiels dargestellt ist; |
| Figur 2 | eine Skizze einer Anordnung mit einer Kamera und einer Codiereinheit zur Codierung der mit der Kamera aufgenommenen Bildfolge sowie eine Anordnung zur Decodierung der codierten Bildfolge; |
| Figur 3 | eine detaillierte Skizze der Anordnung zur Bildcodierung und zur globalen Bewegungskompensation; |
| Figuren 4 a bis c | jeweils ein Bild, in dem ein Bewegungsvektorfeld für das Bild gegenüber einem zeitlich vorangegangenen Bild mit einem vorgegebenen Bereich (Figur 1a), aus dem jeweils die Bewegungsvektoren zur Bildung von Parametern eines Bewegungsmodells ermittelt bestimmt werden und, ein Bild mit allen Bewegungsvektoren (Figur 1b) und ein Bild mit Bewegungsvektoren nach einer Iteration des Verfahrens mit dem in Figur 1a dargestellten vorgegebenen Bereich (Figur 1c) ; |
| Figur 5 | ein Ablaufdiagramm, in dem die Verfahrensschritte des Verfahrens zur Ermittlung des Bildbewegungsvektors für ein Bild dargestellt ist; |
| Figur 6 | eine Skizze, in der die Speicherung von zeitlich vorangegangenen Bildern gemäß einem ersten Ausführungsbeispiel dargestellt ist; |
| Figur 7 | eine Skizze, in der die Auswahl eines Bereichs zur Auswahl eines Bildausschnitts zur Bewegungskompensation eines Bildes gemäß einem zweiten Ausführungsbeispiel dargestellt ist. |

**Erstes Ausführungsbeispiel:**

In **Fig.2** ist eine Anordnung dargestellt, die zwei Rechner 202, 208 und eine Kamera 201 umfaßt, wobei Bildcodierung, Übertragung der Bilddaten und Bilddecodierung veranschaulicht werden.

Eine Kamera 201 ist mit einem ersten Rechner 202 über eine Leitung 219 verbunden. Die Kamera 201 übermittelt aufgenommene Bilder 204 an den ersten Rechner 202. Der erste Rechner 202 verfügt über einen ersten Prozessor 203, der über einen Bus 218 mit einem Bildspeicher 205 verbunden ist. Mit dem ersten Prozessor 203 des ersten Rechners 202 wird ein Verfahren zur Bildcodierung durchgeführt. Auf diese Art codierte Bilddaten 206 werden von dem ersten Rechner 202 über eine Kommunikationsverbindung 207, vorzugsweise eine Leitung oder eine Funkstrecke, zu einem zweiten Rechner 208 übertragen. Der zweite Rechner 208 enthält einen zweiten Prozessor 209, der über einen Bus 210 mit einem Bildspeicher 211 verbunden ist. Mit dem zweiten Prozessor 209 wird ein Verfahren zur Bilddecodierung durchgeführt.

Sowohl der erste Rechner 202 als auch der zweite Rechner 208 verfügen jeweils über einen Bildschirm 212 bzw. 213, auf dem die Bilddaten 204 visualisiert werden. Zur Bedienung sowohl des ersten Rechners 202 als auch des zweiten Rechners 208 sind jeweils Eingabeeinheiten vorgesehen, vorzugsweise eine Tastatur 214 bzw. 215, sowie eine Computermaus 216 bzw. 217.

Die Bilddaten 204, die von der Kamera 201 über die Leitung 219 zu dem ersten Rechner 202 übertragen werden, sind Daten im Zeitbereich, während die Daten 206, die von dem ersten Rechner 202 zu dem zweiten Rechner 208 über die Kommunikationsverbindung 207 übertragen werden, Bilddaten im Spektralbereich sind.

Auf einem Bildschirm 220 werden die decodierten Bilddaten dargestellt.

**Fig.3** zeigt eine Skizze einer Anordnung zur Durchführung des Verfahrens gemäß einem ersten Ausführungsbeispiel, in dessen Rahmen ein blockbasiertes Bildcodierungsverfahren durchgeführt wird.

Ein zu codierender Videodatenstrom mit zeitlich aufeinanderfolgenden digitalisierten Bildern wird einer Bildcodierungseinheit 301 zugeführt. Die digitalisierten Bilder sind unterteilt in Makroblöcke 302, wobei jeder Makroblock 16x16 Bildpunkte enthält. Der Makroblock 302 umfaßt 4 Bildblöcke 303, 304, 305 und 306, wobei jeder Bildblock 8x8 Bildpunkte, denen Luminanzwerte (Helligkeitswerte) zugeordnet sind, enthält. Weiterhin umfaßt jeder Makroblock 302 zwei Chrominanzblöcke 307 und 308 mit den Bildpunkten zugeordneten Chrominanzwerten (Farbinformation, Farbsättigung).

Der Block eines Bildes enthält einen Luminanzwert (=Helligkeit), einen ersten Chrominanzwert (=Farbton) und einen zweiten Chrominanzwert (=Farbsättigung). Dabei werden Luminanzwert, erster Chrominanzwert und zweiter Chrominanzwert als Farbwerte bezeichnet.

Die Bildblöcke werden einer Transformationscodierungseinheit 309 zugeführt. Bei einer Differenzbildcodierung werden zu codierende Werte von Bildblöcken zeitlich vorangegangener Bilder von den aktuell zu codierenden Bildblöcken abgezogen, es wird nur die Differenzbildungsinformation 310 der Transformationscodierungseinheit (Diskrete Cosinus Transformation, DCT) 309 zugeführt. Dazu wird über eine Verbindung 334 der aktuelle Makroblock 302 einer Bewegungsschätzungseinheit 329 mitgeteilt. In der Transformationscodierungseinheit 309 werden für die zu codierenden Bildblöcke bzw. Differenzbildblöcke Spektralkoeffizienten 311 gebildet und einer Quantisierungseinheit 312 zugeführt.

Quantisierte Spektralkoeffizienten 313 werden sowohl einer Scaneinheit 314 als auch einer inversen Quantisierungseinheit 315 in einem Rückwärtspfad zugeführt. Nach einem Scanverfahren, z.B. einem "zigzag"-Scanverfahren, wird auf den gescannten Spektralkoeffizienten 332 eine Entropiecodierung in einer dafur vorgesehenen Entropiecodierungseinheit 316 durchgefuhrt. Die entropiecodierten Spektralkoeffizienten werden als codierte Bilddaten 317 über einen Kanal, vorzugsweise eine Leitung oder eine Funkstrecke, zu einem Decoder übertragen.

In der inversen Quantisierungseinheit 315 erfolgt eine inverse Quantisierung der quantisierten Spektralkoeffizienten 313. So gewonnene Spektralkoeffizienten 318 werden einer inversen Transformationscodierungseinheit 319 (Inverse Diskrete Cosinus Transformation, IDCT) zugeführt. Rekonstruierte Codierungswerte (auch Differenzcodierungswerte) 320 werden im Differenzbildmodus einem Addierer 321 zugeführt. Der Addierer 321 erhält ferner Codierungswerte eines Bildblocks, die sich aus einem zeitlich vorangegangenen Bild nach einer bereits durchgeführten Bewegungskompensation ergeben. Mit dem Addierer 321 werden rekonstruierte Bildblöcke 322 gebildet und in einem Bildspeicher 323 abgespeichert.

Chrominanzwerte 324 der rekonstruierten Bildblöcke 322 werden aus dem Bildspeicher 323 einer Bewegungskompensationseinheit 325 zugeführt. Für Helligkeitswerte 326 erfolgt eine Interpolation in einer dafür vorgesehenen Interpolationseinheit 327. Anhand der Interpolation wird die Anzahl in dem jeweiligen Bildblock enthaltener Helligkeitswerte vorzugsweise verdoppelt. Alle Helligkeitswerte 328 werden sowohl der Bewegungskompensationseinheit 325 als auch der Bewegungsschätzungseinheit 329 zugeführt. Die Bewegungsschätzungseinheit 329 erhält außerdem die Bildblöcke des jeweils zu codierenden Makroblocks (16x16 Bildpunkte) über die Verbindung 334. In der Bewegungsschätzungseinheit 329 erfolgt die Bewegungsschätzung unter Berücksichtigung der interpolierten Helligkeitswerte ("Bewegungsschätzung auf Halbpixelbasis").

Das Ergebnis der Bewegungsschätzung ist ein Bewegungsvektor 330, durch den eine örtliche Verschiebung des ausgewählten Makroblocks aus dem zeitlich vorangegangenen Bild zu dem zu codierenden Makroblock 302 zum Ausdruck kommt.

Sowohl Helligkeitsinformation als auch Chrominanzinformation bezogen auf den durch die Bewegungsschätzungseinheit 329 ermittelten Makroblock werden um den Bewegungsvektor 330 verschoben und von den Codierungswerten des Makroblocks 302 subtrahiert (siehe Datenpfad 231).

Die Bewegungsschätzung erfolgt derart, daß für jeden Bildblock, für den eine Bewegungsschätzung durchgeführt wird, ein Fehler E gegenüber einem Gebiet gleicher Form und Größe wie der Bildblock in einem zeitlich vorangegangen Bild beispielsweise gemäß folgender Vorschrift ermittelt wird:

$$E = \sum_{i=1}^{n} \sum_{j=1}^{m} \left| x_{i,j} - xd_{i,j} \right| \rightarrow \min \qquad \forall d \in S, \qquad (1)$$

wobei mit

- i, j jeweils ein Index,
- n, m eine Anzahl (n) von Bildpunkten entlang einer ersten Richtung x bzw. eine Anzahl (m) von Bildpunkten entlang einer zweiten Richtung y, die in dem Bildblock enthalten sind,
- $x_{i,j}$ die Codierungsinformation, die einem Bildpunkt an der durch die Indizes i,j bezeichneten relativen Position in dem Bildblock zugeordnet ist,
- $xd_{i,j}$ die Codierungsinformation, die dem jeweiligen durch i,j bezeichneten Bildpunkt in dem Gebiet des zeitlich vorangegangenen Bildes, verschoben um einen vorgebbaren Wert d, zugeordnet ist,

- S ein Suchraum vorgegebener Form und Größe, in dem zeitlich vorangegangenen Bild,

bezeichnet wird,

Die Berechnung des Fehlers E wird für jeden Bildblock für verschiedene Verschiebungen innerhalb des Suchraums S durchgeführt. Es wird derjenige Bildblock in dem zeitlich vorangegangenen Bild als dem Bildblock, für den die Bewegungsschätzung durchgeführt wird, ähnlichsten ausgewählt, dessen Fehler E minimal ist.

Als Ergebnis der Bewegungsschätzung ergibt sich somit der Bewegungsvektor 330 mit zwei Bewegungsvektorkomponenten, einer ersten Bewegungsvektorkomponente $BV_x$ und einer zweiten Bewegungsvektorkomponente $BV_y$ entlang der ersten Richtung x und der zweiten Richtung y:

$$BV = \begin{pmatrix} BV_x \\ BV_y \end{pmatrix}. \quad (2)$$

Der Bewegungsvektor 330 wird dem Bildblock zugeordnet.

Die Bildcodierungseinheit aus Figur 3 liefert somit für alle Bildblöcke bzw. Makrobildblöcke einen Bewegungsvektor 330.

Die Bewegungsvektoren 330 werden einer Einheit 335 zur Auswahl bzw. Gewichtung der Bewegungsvektoren 330 zugeführt. In der Einheit zur Auswahl der Bewegungsvektoren 335 werden diejenigen Bewegungsvektoren 330 ausgewählt bzw. hoch gewichtet, die Bildblöcken zugeordnet sind, die sich in einem vorgegebenen Bereich 401 (vgl. Figur 4a) befinden. Des weiteren werden in der Einheit 335 Bewegungsvektoren ausgewählt bzw. hoch gewichtet, die zuverlässig (342) geschätzt wurden.

Die ausgewählten Bewegungsvektoren 336 werden einer Einheit zur Ermittlung der Parameter des Bewegungsmodells 337 zugeführt. In der Einheit zur Ermittlung der Parameter des Bewegungsmodells 337 wird aus den ausgewählten Bewegungsvektoren das im weiteren beschriebene Bewegungsmodell gemäß Figur 1 ermittelt.

Das ermittelte Bewegungsmodell 338 wird einer Einheit zur Kompensation 339 der Bewegung zwischen der Kamera und dem aufgenommen Bild zugeführt. In der Einheit zur Kompensation 339 wird entsprechend eines im weiteren beschriebenen Bewegungsmodells die Bewegung kompensiert, so daß ein in seiner Bewegung kompensiertes, in geringerem Maße verwackeltes Bild 340 in dem Bildspeicher 323 in dem das zuvor nicht bearbeitete, in seiner Bewegung zu kompensierende Bild gespeichert ist, nach der Bearbeitung in der Einheit zur Kompensation 339 wieder gespeichert.

**Fig.1** zeigt in Form eines Blockschaltbildes das Prinzip, welches der globalen Bewegungsermittlung zugrundeliegt.

Ausgehend von einem Bewegungsvektorfeld 101, dem vorgegebenen Bereich bzw. einer Gewichtungsmaske 102 und einer Gewichtungsmaske von Zuverlässigkeitsfaktoren 106 werden die Parameter des im weiteren beschriebenen Bewegungsmodells 338 berechnet (Schritt 103).

Unter einem Bewegungsvektorfeld 101 ist eine Menge aller ermittelten Bewegungsvektoren 330 zu einem Bild zu verstehen. Das Bewegungsvektorfeld 101 ist in **Fig.4b** durch Striche, die jeweils einen Bewegungsvektor 330 für einen Bildblock beschreiben, dargestellt (402). Das Bewegungsvektorfeld 402 ist auf dem digitalisierten Bild 400 skizziert. Das Bild 400 umfaßt ein sich bewegendes Objekt 403 in Form einer Person sowie einen Bildhintergrund 404.

**Fig.4a** zeigt einen vorgegebenen Bereich 401. Der vorgegebene Bereich 401 gibt ein Gebiet an, in dem die Bildblöcke liegen müssen, damit die Bewegungsvektoren, die diesen Bildblöcken zugeordnet sind, ausgewählt werden.

Der vorgegebene Bereich 401 ergibt sich dadurch, daß ein Randbereich 405, der gebildet wird durch Bildblöcke, die in einem vorgegebenen ersten Abstand von 406 von einem Rand 407 des digitalisierten Bildes 400 liegen. Dadurch werden Bildblöcke direkt am Rand 407 des Bildes 400 bei der Ermittlung der Parameter des Bewegungsmodells 338 nicht berücksichtigt. Ferner wird der vorgegebene Bereich 401 durch Bildblöcke gebildet, die in einem vorgegebenen zweiten Abstand 408 von der Mitte 409 des digitalisierten Bildes 400 liegen.

Der vorgegebene Bereich bzw. die Gewichtungsmaske wird in einem iterativen Verfahren mit folgenden Schritten verändert zu einem neuen Bereich der folgenden Iteration (Schritt 104).

Für jeden Bildblock in dem vorgegebenen Bereich 401 wird jeweils ein Vektorunterschiedswert VU ermittelt, mit dem der Unterschied des determinierten Bewegungsmodells 338 mit dem Bewegungsvektor 330, der dem jeweiligen Bildblock zugeordnet ist, beschrieben wird. Der Vektorunterschiedswert VU wird beispielsweise gemäß folgender Vorschrift gebildet:

$$VU = |BV_X - MBV_X| + |BV_Y - MBV_Y|, \tag{3}$$

wobei mit $MBV_x$ und $MBV_y$ jeweils die Komponenten eines aufgrund des Bewegungsmodells berechneten Bildbewegungsvektors MBV bezeichnet sind.

Die Ermittlung des modellbasierten Bildbewegungsvektors wird im weiteren näher erläutert.

Bei Verwendung einer binären Maske ist ein Bildblock in dem neuen Bereich der weiteren Iteration enthalten, wenn der jeweilige Vektorunterschiedswert VU kleiner als ein vorgebbarer Schwellenwert $\varepsilon$ ist. Ist jedoch der Vektorunterschiedswert VU größer als der Schwellenwert $\varepsilon$ so wird der Bildblock, dem der jeweilige Bewegungsvektor zugeordnet ist, nicht mehr in dem neuen vorgegebenen Bereich berücksichtigt.

Bei Verwendung einer Gewichtungsmaske werden die Gewichtungsfaktoren der Blöcke im umgekehrten Verhältnis zum dessen Vektorunterschiedswert VU angegeben.

Durch diese Vorgehensweise wird erreicht, daß diejenigen Bewegungsvektoren, die sich gegenüber den Bildbewegungsvektoren MBV berechnet aus dem determinierten Bewegungsmodell erheblich unterscheiden, nicht bzw. nur geringfügig bei der Berechnung der Parameter des Bewegungsmodells in einer weiteren Iteration berücksichtigt werden.

Nachdem der neue Bereich bzw. die neue Gewichtungsmaske gebildet worden ist, wird unter Verwendung der Bewegungsvektoren, die Bildblöcken zugeordnet sind, die in dem neuen Bereich enthalten sind, bzw. unter zusätzlicher Verwendung der Gewichtungsmaske ein neuer Parametersatz für das Bewegungsmodell determiniert.

Das oben beschriebene Verfahren wird in einer vorgebbaren Anzahl von Iterationen oder solange bis ein Abbruchkriterium, wie beispielsweise die Unterschreitung einer Anzahl an eliminierten Blöcken in einem Iterationsschritt, erfüllt ist durchgeführt.

Dabei wird jeweils der neue Bereich als der vorgegebene Bereich bzw. die neue Gewichtungsmaske neben den alten Bewegungsvektoren als Eingangsgrößen der nächsten Iteration verwendet.

Die Ermittlung der globalen Bewegung erfolgt derart, daß Parameter eines Modells für die globale Kamerabewegung ermittelt werden.

Zur Verdeutlichung des Bewegungsmodells wird im weiteren eine detaillierte Herleitung des Bewegungsmodells dargestellt:

Es wird davon ausgegangen, daß eine natürliche, dreidimensionale Szene mit der Kamera auf eine zweidimensionale Projektionsebene abgebildet wird. Eine Abbildung eines Punktes

$$\underline{p}_0 = (x_0, y_0, z_0)^T \tag{4}$$

wird gemäß folgender Vorschrift gebildet:

$$\begin{pmatrix} X \\ Y \end{pmatrix} = \frac{F}{z_0} \begin{pmatrix} x_0 \\ y_0 \end{pmatrix} \quad \wedge \quad z_0 \gg F, \tag{5}$$

wobei mit F eine Brennweite und mit X, Y Koordinaten des abgebildeten Punktes $\underline{p}_0$ auf der Bildebene beschreiben.

Wird nun die Kamera bewegt, so bleibt die Abbildungsvorschrift im synchron zur Kamera mitbewegten Koordinatensystem erhalten, die Koordinaten der Objektpunkte müssen jedoch in dieses Koordinatensystem transformiert werden. Da man alle Kamerabewegungen als Akkumulation von Rotation und Translation auffassen kann, läßt sich die Transformation vom ortsfesten Koordinatensystem (x, y, z) zu einem mitbewegten Koordinatensystem

$$(\tilde{x}_0, \tilde{y}_0, \tilde{z}_0)$$

gemäß folgender Vorschrift formulieren:

$$\begin{pmatrix} \tilde{x}_0 \\ \tilde{y}_0 \\ \tilde{z}_0 \end{pmatrix} = \begin{pmatrix} r_{11} & r_{12} & r_{13} \\ r_{21} & r_{22} & r_{23} \\ r_{31} & r_{32} & r_{33} \end{pmatrix} \cdot \begin{pmatrix} x_0 \\ y_0 \\ z_0 \end{pmatrix} + \begin{pmatrix} t_1 \\ t_2 \\ t_3 \end{pmatrix}. \quad (6)$$

Ausgehend von Vorschrift (6) wird eine von der Kamerabewegung verursachte Bildveränderung gemäß folgender Vorschrift modelliert:

$$\begin{pmatrix} \Delta X \\ \Delta Y \end{pmatrix} = \begin{pmatrix} C_F \cos(\varphi_z) - 1 & -C_F \sin(\varphi_z) \\ C_F \sin(\varphi_z) & C_F \cos(\varphi_z) - 1 \end{pmatrix} \cdot \begin{pmatrix} X \\ Y \end{pmatrix} + \begin{pmatrix} t_X \\ t_Y \end{pmatrix}, \quad (7)$$

wobei mit $\Delta X$, $\Delta Y$ eine Koordinatenveränderung der Bildpunkte, hervorgerufen in einem Zeitintervall $\Delta t$ bei beschriebener Kamerabewegung ist und mit $\varphi_z$ der Winkel um den die Kamera um ein z-Achse in diesem Zeitintervall $\Delta t$ rotiert wurde, bezeichnet wird. Ein vorgegebener Faktor $C_F$ bezeichnet eine Brennweitenänderung bzw. eine Translation entlang der z-Achse.

Das in Vorschrift (7) dargestellte Gleichungssystem ist nichtlinear, weshalb eine direkte Bestimmung der Parameter des Gleichungssystems nicht möglich ist.

Aus diesem Grund wird zur schnelleren Berechnung ein vereinfachtes Bewegungsmodell verwendet, bei dem die Kamerabewegung in der Abbildungsebene durch ein Bewegungsmodell mit 6 Parametern verwendet wird, welche gemäß folgender Vorschrift gebildet werden:

$$\begin{pmatrix} \tilde{X}_0 \\ \tilde{Y}_0 \end{pmatrix} = \begin{pmatrix} r'_{11} & r'_{12} \\ r'_{21} & r'_{22} \end{pmatrix} \cdot \begin{pmatrix} X_0 \\ Y_0 \end{pmatrix} + \begin{pmatrix} t'_X \\ t'_Y \end{pmatrix}. \quad (8)$$

Das hieraus mit den Daten des Bewegungsvektorfeldes entstehende Gleichungssystem wird nun durch lineare Regression gelöst, wobei die Komplexität einer Invertierung einer symmetrischen 3 * 3 Matrix entspricht.

Nach Bestimmung der Parameter $r'_{11}$, $r'_{12}$, $r'_{21}$, $r'_{22}$, $t'_X$, und $t'_Y$ werden die Parameter der Vorschrift (7) gemäß folgenden Vorschriften approximiert:

$$\underline{T} = \underline{T}', \quad (9)$$

$$C_F = \sqrt{\left|\det\begin{pmatrix} r_{11}' & r_{12}' \\ r_{21}' & r_{22}' \end{pmatrix}\right|}, \quad (10)$$

$$\rho_z = \arcsin \frac{1}{2}\left(r'_{21} - r'_{12}\right). \quad (11)$$

**Fig.4c** zeigt die Bewegungsvektoren, die Bildblöcken zugeordnet sind, die in dem vorgegebenen Bereich 401 liegen. Dabei ist der vorgegebene Bereich 401 durch eine Iteration (Schritt 104) gegenüber dem vorgegebenen Bereich 401 aus Figur 4a verändert.

Unter Verwendung dieser Parameter wird der Bildbewegungsvektor für das Bild ermittelt, mit dem die Bewegung, der das Bild relativ zu der das Bild aufnehmenden Kamera unterliegt, beschrieben wird.

Jedes Bild der zeitlichen Folge von Bildern wird, verschoben um den jeweiligen Bildbewegungsvektor, der für das Bild ermittelt worden ist, in dem Bildspeicher 323 gespeichert. Der Bildspeicher 323 ist größer als das Format der Kamera, die die Folge der Bilder aufnimmt. Somit wird anschaulich der Ausschnitt der Kamera, repräsentiert durch das rekonstruierte Bild, innerhalb des Bildspeichers 323 um den jeweiligen Bildbewegungsvektor verschoben und dann bewegungskompensiert gespeichert. Bei der Speicherung eines aktuellen, bewegungskompensierten Bildes werden Bereiche in dem Bildspeicher, die durch vorangegangene Bilder schon beschrieben sind, durch das neue Bild überschrieben.

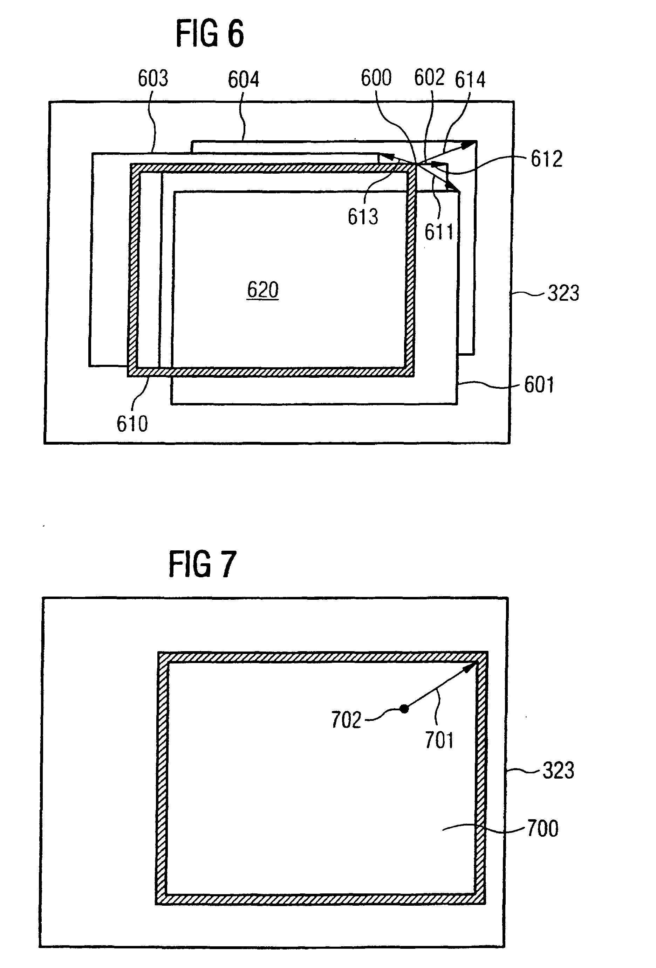

Diese Vorgehensweise ist in **Fig.6** durch vier Bilder 601, 602, 603, 604 symbolisch dargestellt. Jedes der vier Bilder 601, 602, 603, 604 ist um einen dem jeweiligen Bild 601, 602, 603, 604 zugeordneten Bildbewegungsvektor 611, 612, 613, 614 entsprechenden Vektor, ausgehend von einer Grundposition 600, verschoben.

Als bewegungskompensiertes Bild wird für das aktuell zu codierende bzw. darzustellende Bild die Bildinformation innerhalb des Bildspeichers 323 ausgelesen, die sich in einem Bereich 610 des Bildspeichers 323 enthält, der die Grundposition 600 am oberen rechten Rand des Bereichs 610 enthält.

Das ausgelesene Bild ist in **Fig.6** mit dem Bezugszeichen 620 dargestellt.

Handelt es sich bei dem Hintergrund der aufgenommenen Bilderfolge um ein starres Objekt, z.B. um eine Landschaft oder die Rückwand eines Videokonferenzraumes, so baut sich über die Zeit nach Codierung und bewegungskompensierter Speicherung einer Mehrzahl von Bildern in dem Bildspeicher 323 eine größere zusammenhängende Fläche des realen Bildhintergrundes auf, verursacht insbesondere durch verschiedene Kamerablickpunkte bei der Aufnahme der Bilderfolge.

Es wird stets, d.h. für jedes Bild, der gleiche Bereich 620 aus dem Bildspeicher 323 ausgelesen.

Anhand von **Fig.5** wird das Verfahren noch einmal in seinen einzelnen Verfahrensschritten dargestellt:

Nach Start des Verfahrens (Schritt 501) wird ein Bildblock oder Makrobildblock ausgewählt (Schritt 502). Für den ausgewählten Bildblock oder Makrobildblock wird ein Bewegungsvektor ermittelt (Schritt 503) und es wird in einem weiteren Schritt (Schritt 504) überprüft, ob alle Bildblöcke bzw. Makrobildblöcke des Bildes bearbeitet sind.

Ist dies nicht der Fall, so wird in einem weiteren Schritt (Schritt 505) ein weiterer Bildblock oder Makrobildblock, der noch nicht bearbeitet wurde, ausgewählt.

Sind jedoch alle Bildblöcke bzw. Makrobildblöcke bearbeitet, so werden die Bewegungsvektoren ausgewählt, die einem Bildblock oder einem Makrobildblock zugeordnet sind, die in dem vorgegebenen Bereich liegen (Schritt 506).

Aus den ausgewählten Bewegungsvektoren werden die Parameter des Bewegungsmodells bestimmt (Schritt 507). Ist eine weitere Iteration durchzuführen, d.h. die angegebene Anzahl an Iterationen noch nicht erreicht oder das Abbruchkriterium noch nicht erfüllt, so wird in einem weiteren Schritt (Schritt 509) ein neuer Bereich festgelegt bzw. die Gewichtungsmaske der nächsten Iteration in Abhängigkeit der Vektorunterschiedswerte VU berechnet (Schritt 510).

Es folgt die Kompensation der Bewegung des Bildes unter Verwendung des determinierten Bewegungsmodells (Schritt 508).

Im weiteren werden einige Alternativen zu dem oben dargestellten Ausführungsbeispiel erläutert:

Die Form des Bereichs ist grundsätzlich beliebig und vorzugsweise abhängig von Vorwissen über eine Szene. Es sollten diejenigen Bildbereiche nicht zur Determinierung des Bewegungsmodells herangezogen werden, von denen bekannt ist, daß sich diese Bildbereiche von der globalen Bewegung deutlich unterscheiden.

Der Bereich sollte nur Bewegungsvektoren von Bildbereichen enthalten, die aufgrund der Zuverlässigkeitswerte 342 des Bewegungsschätzverfahrens als zuverlässig ausgewiesen sind.

Allgemein kann die Bewegungsschätzung nach einem beliebigen Verfahren erfolgen und ist keineswegs auf das Prinzip des Blockmatchings beschränkt. So kann beispielsweise auch eine Bewegungsschätzung unter Verwendung der dynamischen Programmierung erfolgen.

Somit ist die Art der Bewegungsschätzung und somit die Art und Weise, wie ein Bewegungsvektor für einen Bildblock ermittelt wird, für die Erfindung nicht relevant.

Zur näherungsweisen Bestimmung der Parameter des Gleichungssystems (7) ist es alternativ möglich, die Sinus-Terme und Cosinus-Terme in Vorschrift (7) zu linearisieren.

Damit ergibt sich für kleine Winkel $\rho_z$ folgende Vorschrift

$$\begin{pmatrix} \Delta X \\ \Delta Y \end{pmatrix} = \begin{pmatrix} C_F - 1 & -C_F\omega_z \\ C_F\omega_z & C_F - 1 \end{pmatrix} \cdot \begin{pmatrix} X \\ Y \end{pmatrix} + \begin{pmatrix} t_X \\ t_Y \end{pmatrix} = \begin{pmatrix} R_1 & -R_2 \\ R_2 & R_1 \end{pmatrix} \cdot \begin{pmatrix} X \\ Y \end{pmatrix} + \begin{pmatrix} t_X \\ t_Y \end{pmatrix}. \quad (12)$$

Da die Optimierung der Gleichungen für $\Delta X$ und $\Delta Y$ nicht unabhängig voneinander ist, wird bezüglich der Summe der Fehlerquadrate minimiert, also gemäß folgender Vorschrift:

$$\sum_{\underline{V}} \left[ \left( \Delta X_\eta - R_1 X_\eta + R_2 Y_\eta - t_x \right)^2 + \left( \Delta Y_\eta - R_2 X_\eta + R_1 Y_\eta - t_y \right)^2 \right] \rightarrow \min \tag{13}$$

Hierbei bezeichnen $\Delta X_\eta$, $\Delta Y_\eta$ die X- bzw. Y- Komponente des Bewegungsvektors des Bildblocks $\eta$ an der Position $X_\eta$, $Y_\eta$ des vorgegebenen Bereichs $\underline{V}$ des Bildes.

Gemäß Gleichung (12) sind $R_1$, $R_2$, $t_x$ und $t_y$ die zu bestimmenden Parameter des Bewegungsmodells.

Nach erfolgter Durchführung des Optimierungsverfahrens wird aufgrund des determinierten Gleichungssystems (12) durch Einsetzen der X- und Y-Komponente des jeweiligen Makroblocks der zugehörige modellbasierte Bewegungsvektor MBV ($\Delta X$, $\Delta Y$) bestimmt.

Statt der oben genannten Bereiche können auch Gewichtungsmasken $A_X$, $A_Y$, die die Zuverlässigkeit der Bewegungsvektoren, das a priori Wissen und die Rückschlüsse aus den VU bei iterativen Vorgehen für die X- und Y-Komponente der Bewegungsvektoren getrennt repräsentieren bei der Berechnung der Parameter des Bewegungsmodells gemäß folgenden Optimierungsansatzes genutzt werden:

$$\sum_{\underline{V}} \left[ \begin{array}{l} \left( \alpha_{X_\eta} \cdot \left( \Delta X_\eta - R_1 X_\eta + R_2 Y_\eta - t_x \right) \right)^2 + \\ \left( \alpha_{Y_\eta} \cdot \left( \Delta Y_\eta - R_2 X_\eta - R_1 Y_\eta - t_x \right) \right)^2 \end{array} \right] \rightarrow \min$$

$$\alpha_{X_\eta} \in A_X, \alpha_{Y_\eta} \in A_Y. \tag{14}$$

Eine Gewichtungsmaske $A_x$, $A_y$ für die Zuverlässigkeit der Bewegungsvektoren (105) kann beispielsweise berechnet werden, indem die Werte $\alpha_x$, $\alpha_y$ für einen Bildblock beim Blockmatching wie folgt berechnet werden:

$$\alpha_x = \frac{1}{SAD_{match}} \cdot \sum_N \frac{|SAD_\eta - SAD_{match}|}{|x_\eta - x_{match}|}, \tag{15}$$

$$\alpha_y = \frac{1}{SAD_{match}} \cdot \sum_N \frac{|SAD_\eta - SAD_{match}|}{|y_\eta - y_{match}|}, \tag{16}$$

wobei $SAD_\eta$ die Summe der Pixeldifferenzen eines Blocks bei der $\eta$-ten Verschiebung

$$\left( x_\eta, y_\eta \right)$$

des Blockmatching und $SAD_{match}$ selbiges für das beste, schließlich ausgewählte Gebiet

$$(x_{match}, y_{match})$$

darstellt. N ist die Gesamtanzahl an Suchpositionen, die untersucht worden sind. Wird dieser Wert nur unter Beachtung der beispielsweise 16 besten Gebiete berechnet, so kann das Blockmatching als "Spiralsuche", mit dem SAD des schlechtesten der 16 ausgewählten Gebiete als Abbruchkriterium, durchgeführt werden.

Eine weitere Möglichkeit, eine Gewichtungsmaske $A_x$ = Ay = A für die Zuverlässigkeit der Bewegungsvektoren zu berechnen besteht mit:

$$\alpha = \Sigma \frac{SAD - SADmatch}{N}, \tag{17}$$

wobei $\alpha = \alpha_x = \alpha_y$ der Gewichtungsfaktor eines Bildblocks bzw. dessen Bewegungsvektors ist.

Die Erfindung kann beispielsweise eingesetzt werden zur Kompensation einer Bewegung einer sich bewegenden Kamera oder auch zur Bewegungskompensation einer Kamera, die in ein mobiles Kommunikationsgerät (Videohandy) integriert ist.

**Zweites Ausführungsbeispiel:**

**Fig.7** zeigt den Bildspeicher 323 mit der symbolischen Darstellung der Speicherung und des Auslesens des Bildes gemäß einem zweiten Ausführungsbeispiel.

Im Rahmen dieses Ausführungsbeispiels wird vorausgesetzt, daß die Kamera ein Bild aufnimmt mit einem größeren Bildformat, als es für die Bildausgabe erforderlich ist.

Das Verfahren entspricht im wesentlichen dem ersten Ausführungsbeispiel, mit dem Unterschied, daß nunmehr ein Bildausschnitt 700 aus dem Bildspeicher 323 nach erfolgter Bewegungsschätzung ausgelesen wird, der um den ermittelten Bildbewegungsvektor 701 ausgehend von einer Grundposition 702 verschoben ist.

Es ist zu bemerken, daß die Bewegungskompensation für das Bild vor der Transformationscodierung der einzelnen Bildblökke erfolgt, damit ein Coder eingesetzt werden kann, mit dem das Bildformat des auszugebenden Bildes verarbeitet wird. Anschaulich bedeutet dies, daß die Bewegungskompensation in diesem Fall dem Coder "vorgeschaltet" ist.

Im weiteren werden Alternativen zu den oben dargestellten Ausführungsbeispielen dargestellt:

Das Verfahren zur Bewegungskompensation ist nicht abhängig von dem gewählten Verfahren zur Bewegungsschätzung, d.h. es konnen beliebige Verfahren zur Ermittlung des Bildbewegungsvektors eingesetzt werden.

In diesem Dokument sind folgende Veröffentlichungen zitiert:


[1] K. Uomori, A. Morimura, H. Ishii, Electronic image stabilization system for video cameras and VCRs, SMPTE Journal, Vol. 101, Nr. 2, S. 66 - 75, 1992

[2] ITU-T, International Telecommunication Union, Telecommunications Sector of ITU, Draft ITU-T Recommendation H.263, Videocoding for low bitrate communication, 02. Mai 1996

[3] S.B. Balakirsky, R. Chellappa, Performance characterization of image stabilizaton algorithms, Proc. Int. Conf. On Image Processing, Vol. 2, 3, S 413 - 416, 1996

[4] R. Gupta, M.C. Theys, H.J. Siegel, Background compensation and an active-camera motion tracking algorithm, Proc. Of the 1997 Int. Conf on Parallel Processing, S. 431 - 440, 1997

[5] D. Wang, L. Wang, Global Motion Parameter Estimation Using a Fast and Robust Alogorithm, IEEE Trans. On Circuits and Systems for Video Tech., Vol. 7, No. 5, S. 823 - 826, 1997

[6] Migliorati P. et al, "Multistage Motion Estimation for Image Interpolation", ELSEVIER Science Publishers, Amsterdam, Bd. 7, Nr. 3, Sept. 1995 (1995-09-01) S. 187-199

[7] WO 99 12355 A

## Patentansprüche

1. Verfahren zur rechnergestützten Bewegungskompensation eines digitalisierten Bildes,

   - bei dem für das Bild und für eine vorgegebene Anzahl zeitlich vorangegangener Bilder jeweils für das gesamte Bild eine Bewegungsschätzung durchgeführt wird, womit jeweils ein Bildbewegungsvektor ermittelt wird,
   - bei dem die Bilder unter Verwendung des jeweiligen Bildbewegungsvektors bewegungskompensiert in einem Speicher gespeichert werden,
   - bei dem ein vorgegebener Bereich des Speichers ausgelesen wird zur Bildung des bewegungskompensierten Bildes und
   - bei dem jedes zeitlich vorangegangene Bild bewegungskompensiert durch das zeitlich nachfolgende Bild in dem Speicher in überlappenden Bereichen der Bilder überschrieben wird.

2. Verfahren nach Anspruch 1,
   eingesetzt zur Codierung eines digitalisierten Bildes.

3. Verfahren nach einem der vorangegangenen Ansprüchen, eingesetzt zur Decodierung eines digitalisierten Bildes.

4. Anordnung zur rechnergestützten Bewegungskompensation eines digitalisierten Bildes,
   mit einem Prozessor, der derart eingerichtet ist, daß folgende Schritte durchführbar sind:

   - für das Bild und für eine vorgegebene Anzahl zeitlich vorangegangener Bilder jeweils für das gesamte Bild wird eine Bewegungsschätzung durchgeführt, womit jeweils ein Bildbewegungsvektor ermittelt wird,
   - die Bilder werden unter Verwendung des jeweiligen Bildbewegungsvektors bewegungskompensiert in einem Speicher gespeichert, jedes zeitlich vorangegangene Bild bewegungskompensiert durch das zeitlich nachfolgende Bild in
   - dem Speicher in überlappenden Bereichen der Bilder überschrieben wird, und
   - ein vorgegebener Bereich des Speichers wird ausgelesen zur Bildung des bewegungskompensierten Bildes.

5. Computerlesbares Speichermedium, auf dem ein Programm gespeichert ist, das es einem Computer ermöglicht, nachdem es in einen Speicher des Computers geladen worden ist, folgende Schritte durchzuführen zur Bewegungskompensation eines digitalisierten Bildes:

   - für das Bild und für eine vorgegebene Anzahl zeitlich vorangegangener Bilder jeweils für das gesamte Bild wird eine Bewegungsschätzung durchgeführt, womit jeweils ein Bildbewegungsvektor ermittelt wird,
   - die Bilder werden unter Verwendung des jeweiligen Bildbewegungsvektors bewegungskompensiert in einem Speicher gespeichert, wobei jedes zeitlich vorangegangene Bild bewegungskompensiert durch das zeitlich nachfolgende Bild in dem Speicher in überlappenden Bereichen der Bilder überschrieben wird, und
   - ein vorgegebener Bereich des Speichers wird ausgelesen zur Bildung des bewegungskompensierten Bildes.

6. Computerprogramm-Erzeugnis, das ein computerlesbares Speichermedium umfaßt, auf dem ein Programm gespeichert ist, das es einem Computer ermöglicht, nachdem es in einen Speicher des Computers geladen worden ist, folgende Schritte durchzuführen zur Bewegungskompensation eines digitalisierten Bildes:

   - für das Bild und für eine vorgegebene Anzahl zeitlich vorangegangener Bilder jeweils für das gesamte Bild wird eine Bewegungsschätzung durchgeführt, womit jeweils ein Bildbewegungsvektor ermittelt wird,
   - die Bilder werden unter Verwendung des jeweiligen Bildbewegungsvektors bewegungskompensiert in einem Speicher gespeichert, wobei jedes zeitlich vorangegangene Bild bewegungskompensiert durch das zeitlich nachfolgende Bild in dem Speicher in überlappenden Bereichen der Bilder überschrieben wird, und
   - ein vorgegebener Bereich des Speichers wird ausgelesen zur Bildung des bewegungskompensierten Bildes.

## Claims

1. Method for computer-aided motion compensation in a digitized image,

   - in which motion estimation is in each case carried out for the entire image, for that image and for a predetermined number of previous images, with an image motion vector being determined in each case,

- in which the images are stored in a memory having been compensated for motion, using the respective image motion vector,
- in which a predetermined area of the memory is read in order to form the motion-compensated image, and
- in which each previous image is overwritten, with motion compensation by the subsequent image in the memory, in overlapping areas of the images.

**2.** Method according to Claim 1, used for coding a digitized image.

**3.** Method according to one of the preceding claims, used for decoding a digitized image.

**4.** Arrangement for computer-aided motion compensation in a digitized image, having a processor which is set up such that the following steps can be carried out:

- motion estimation is in each case carried out for the entire image, for that image and for a predetermined number of previous images, with an image motion vector being determined in each case,the images are stored in a memory having been compensated for motion, using the respective image motion vector, each previous image is overwritten, with motion compensation by the subsequent image in the memory, in overlapping areas of the images, and
- a predetermined area of the memory is read in order to form the motion-compensated image.

**5.** Computer-legible storage medium, in which a program is stored which allows a computer to carry out the following steps for motion compensation in a digitized image once said program has been loaded in a memory in the computer:

- motion estimation is in each case carried out for the entire image, for that image and for a predetermined number of previous images, with an image motion vector being determined in each case,
- the images are stored in a memory having been compensated for motion, using the respective image motion vector, in which case each previous image is overwritten with motion compensation by the subsequent image in the memory, in overlapping areas of the images, and
- a predetermined area of the memory is read in order to form the motion-compensated image.

**6.** Computer program product, which comprises a computer-legible storage medium, in which a program is stored which allows a computer to carry out the following steps for motion compensation in a digitized image once said program has been loaded in a memory in the computer:

- motion estimation is in each case carried out for the entire image, for that image and for a predetermined number of previous images, with an image motion vector being determined in each case,
- the images are stored in a memory having been compensated for motion, using the respective image motion vector, and each previous image is overwritten, with motion compensation by the subsequent image in the memory, in overlapping areas of the images, and
- a predetermined area of the memory is read in order to form the motion-compensated image.

## Revendications

**1.** Procédé pour compenser de manière assistée par ordinateur le mouvement d'une image numérisée,

- dans lequel une estimation de mouvement est réalisée pour l'image et pour un nombre prédéfinie d'images précédentes dans le temps, respectivement pour l'image toute entière, sur quoi un vecteur de mouvement d'image est respectivement déterminé,
- dans lequel les images sont mémorisées, en utilisant le vecteur respectif de mouvement d'image, dans une mémoire en étant compensées en mouvement,
- dans lequel une zone prédéfinie de la mémoire est lue pour la formation de l'image à mouvement compensé et
- dans lequel chaque image précédente dans le temps est écrasée dans la mémoire, en étant compensée en mouvement dans des zones chevauchantes, par l'image suivante dans le temps.

**2.** Procédé selon la revendication 1,

utilisé pour le codage d'une image numérisée.

3. Procédé selon l'une quelconque des revendications précédentes, utilisé pour le décodage d'une image numérisée.

4. Dispositif pour compenser de manière assistée par ordinateur le mouvement d'une image numérisée, comprenant un processeur qui est équipé de telle manière que les étapes suivantes peuvent être exécutées :

- une estimation de mouvement est réalisée pour l'image et pour un nombre prédéfini d'images précédentes dans le temps, respectivement pour l'image toute entière, sur quoi un vecteur de mouvement d'image est respectivement déterminé,
- les images sont mémorisées, en utilisant le vecteur respectif de mouvement d'image, dans une mémoire en étant compensées en mouvement, chaque image précédente dans le temps est écrasée dans la mémoire en étant compensée en mouvement, dans des zones chevauchantes des images, par l'image suivante dans le temps, et
- une zone prédéfinie de la mémoire est lue pour la formation de l'image à mouvement compensé.

5. Support d'informations lisible par ordinateur, sur lequel est mémorisé un programme qui, après avoir été chargé dans une mémoire d'un ordinateur, permet à l'ordinateur d'exécuter les étapes suivantes pour compenser le mouvement d'une image numérisée :

- une estimation de mouvement est réalisée pour l'image et pour un nombre prédéfini d'images précédentes dans le temps, respectivement pour l'image toute entière, sur quoi un vecteur de mouvement d'image est respectivement déterminé,
- les images sont mémorisées, en utilisant le vecteur respectif de mouvement d'image, dans une mémoire en étant compensées en mouvement, chaque image précédente dans le temps étant écrasée dans la mémoire en étant compensée en mouvement, dans des zones chevauchantes des images, par l'image suivante dans le temps, et
- une zone prédéfinie de la mémoire est lue pour la formation de l'image à mouvement compensé.

6. Produit-programme d'ordinateur comprenant un support d'informations lisible par ordinateur, sur lequel est mémorisé un programme qui, après avoir été chargé dans une mémoire d'un ordinateur, permet à l'ordinateur d'exécuter les étapes suivantes pour compenser le mouvement d'une image numérisée :

- une estimation de mouvement est réalisée pour l'image et pour un nombre prédéfini d'images précédentes dans le temps, respectivement pour l'image toute entière, sur quoi un vecteur de mouvement d'image est respectivement déterminé,
- les images sont mémorisées, en utilisant le vecteur respectif de mouvement d'image, dans une mémoire en étant compensées en mouvement, chaque image précédente dans le temps étant écrasée dans la mémoire en étant compensée en mouvement, dans des zones chevauchantes des images, par l'image suivante dans le temps, et
- une zone prédéterminée de la mémoire est lue pour la formation de l'image à mouvement compensé.

FIG 1

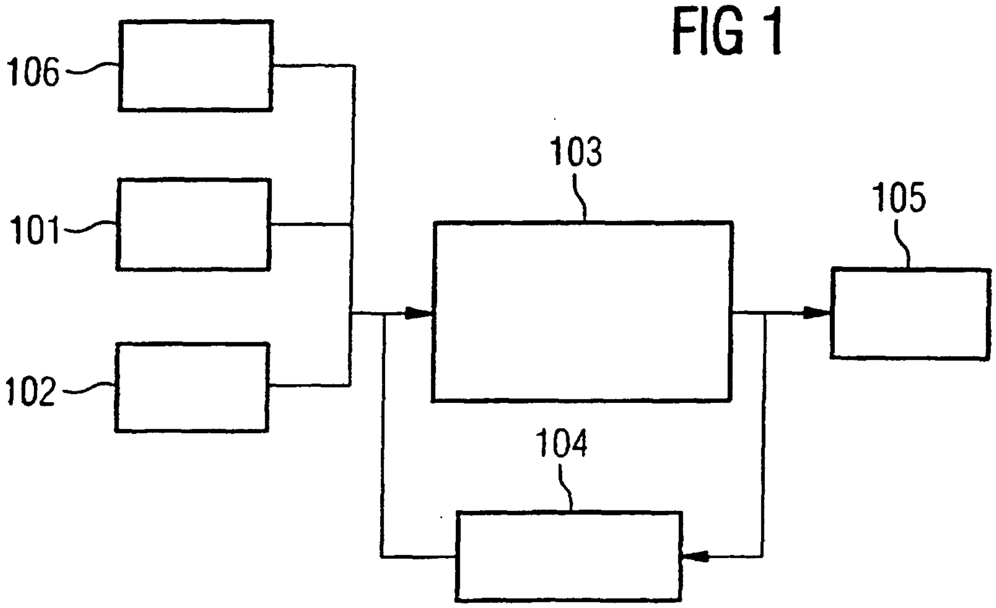
106
101
102
103
104
105

FIG 2

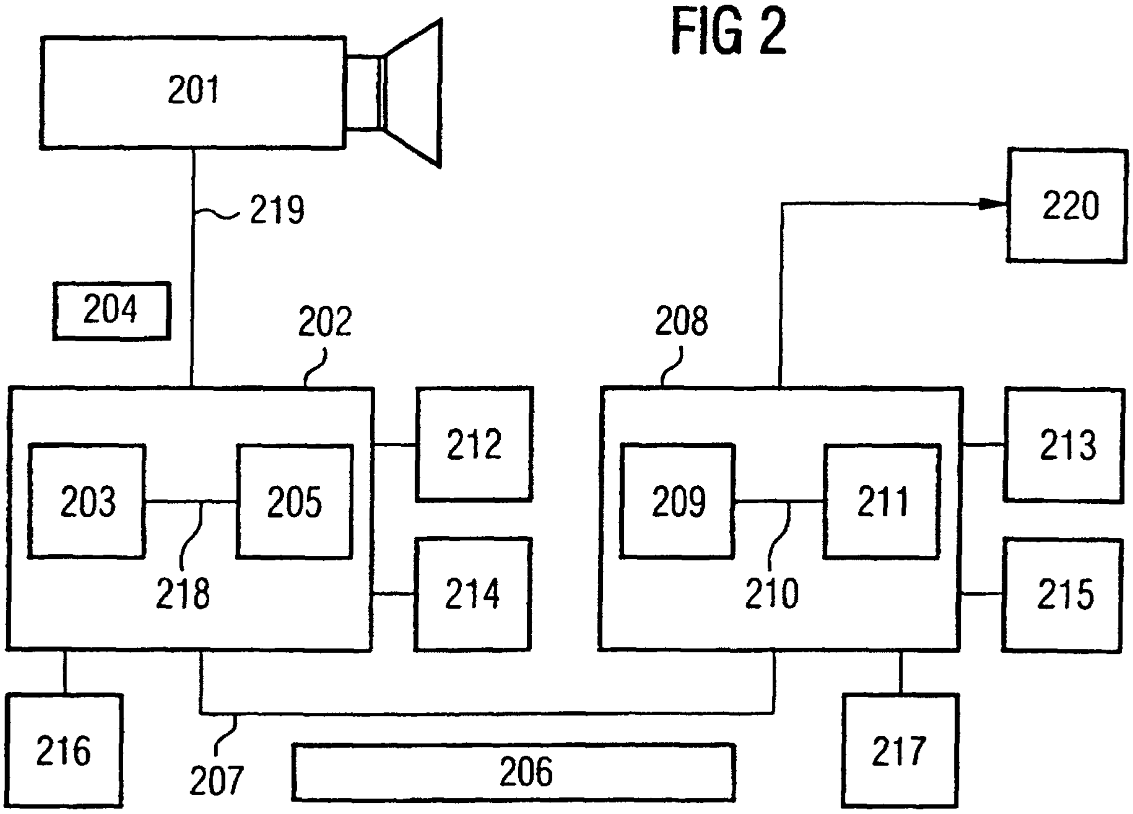
201
219
204
202
203
205
218
208
209
211
210
220
212
214
213
215
216
207
206
217

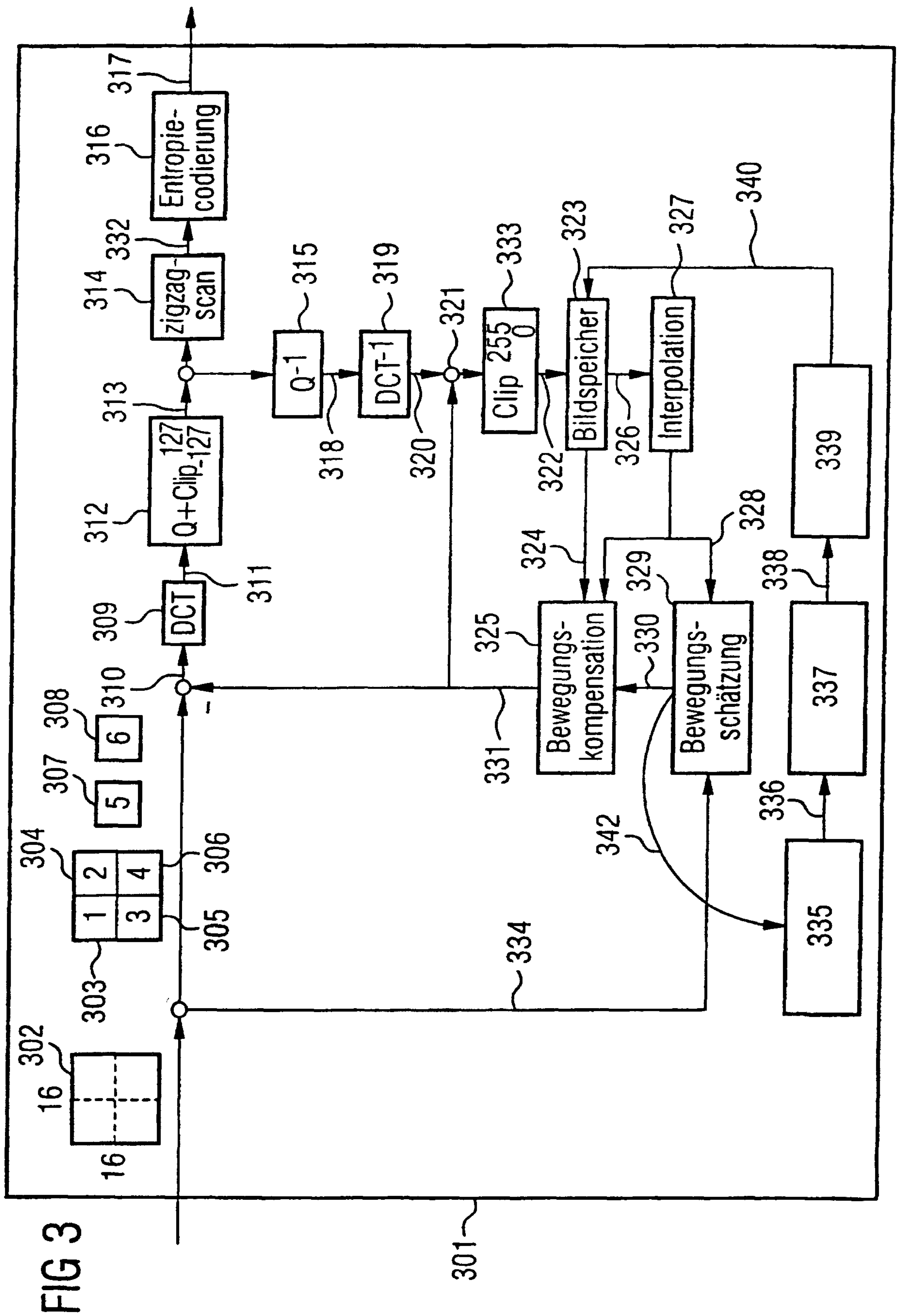
Entropie-codierung
zigzag-scan
Q+Clip 127 -127
Q-1
DCT-1
Clip 255 0
Bildspeicher
Interpolation
DCT
Bewegungs-kompensation
Bewegungs-schätzung
335
337
339
1 2 3 4
5
6
16
16
301 302 303 304 305 306 307 308 309 310 311 312 313 314 315 316 317 318 319 320 321 322 323 324 325 326 327 328 329 330 331 332 333 334 336 338 340 342

FIG 3

FIG 4C

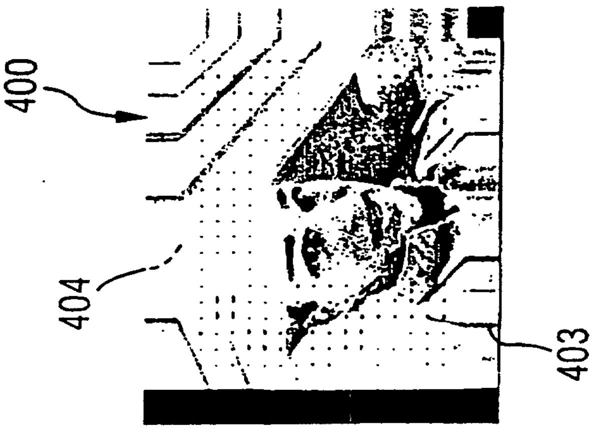


FIG 4B

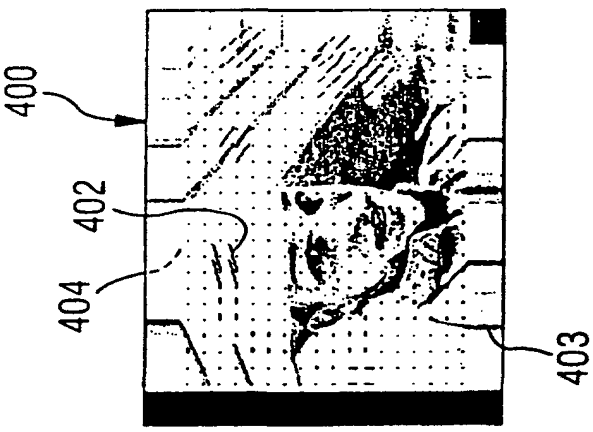


FIG 4A

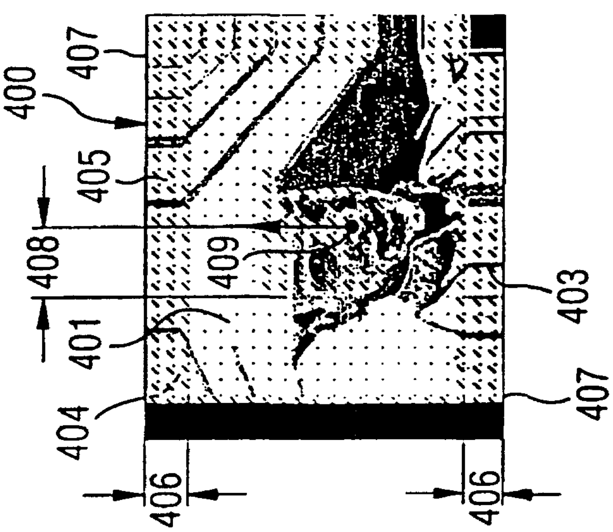

FIG 5

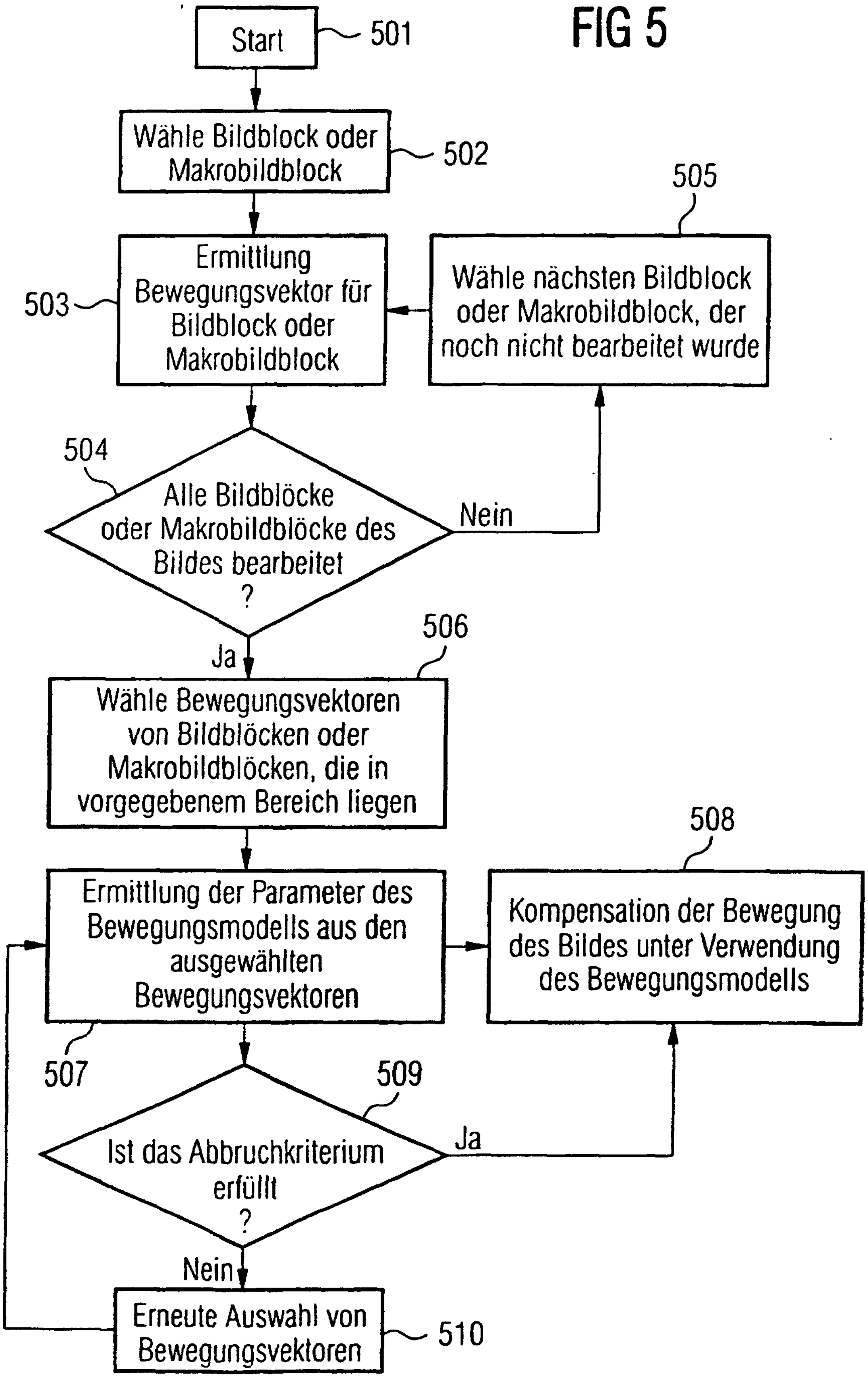
Start
501
Wähle Bildblock oder Makrobildblock
502
Ermittlung Bewegungsvektor für Bildblock oder Makrobildblock
503
505
Wähle nächsten Bildblock oder Makrobildblock, der noch nicht bearbeitet wurde
504
Alle Bildblöcke oder Makrobildblöcke des Bildes bearbeitet ?
Nein
Ja
506
Wähle Bewegungsvektoren von Bildblöcken oder Makrobildblöcken, die in vorgegebenem Bereich liegen
508
Ermittlung der Parameter des Bewegungsmodells aus den ausgewählten Bewegungsvektoren
Kompensation der Bewegung des Bildes unter Verwendung des Bewegungsmodells
507
509
Ist das Abbruchkriterium erfüllt ?
Ja
Nein
Erneute Auswahl von Bewegungsvektoren
510

FIG 6

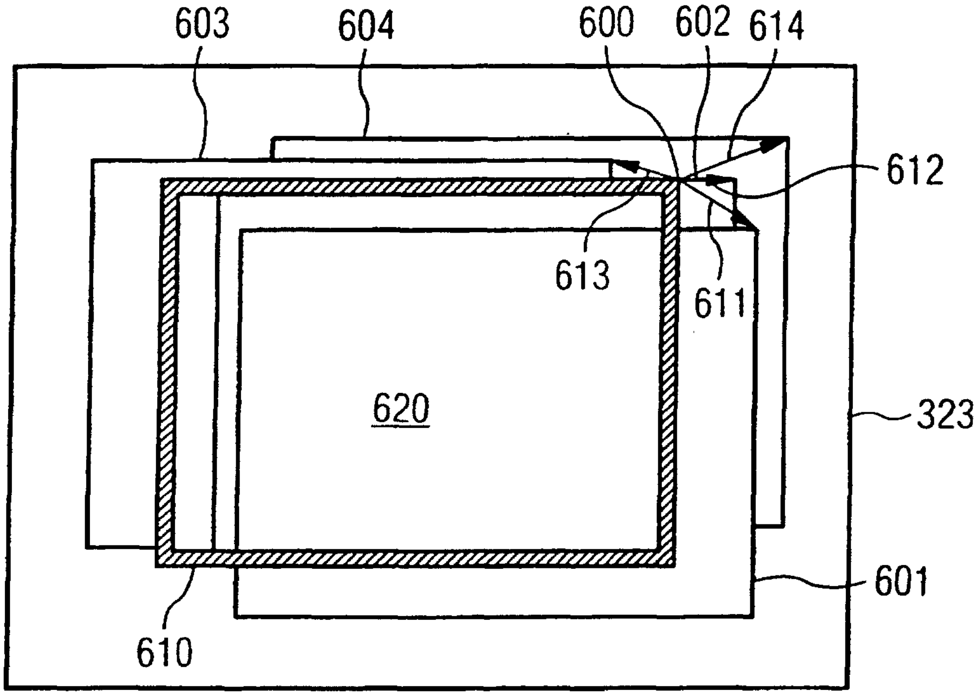


FIG 7